# EUROPEAN PATENT APPLICATION

(11) **EP 4 844 867 A1**
(43) Date of publication of application: **25.11.2026**
(21) Application number: 26168417.9
(22) Date of filing: 27.03.2026
(51) Int. Cl.: H01M 10/0562, H01M 4/13, H01M 4/36, H01M 4/38, H01M 4/62, H01M 4/02

(54) **ELECTRODE MIXTURE, ELECTRODE LAYER, BATTERY, AND SOLID-STATE BATTERY**

(30) Priority: 19.05.2025 JP 2025083409
(71) Applicant: Toyota Jidosha Kabushiki Kaisha, Toyota-shi, Aichi-ken 471-8571 (JP)
(72) Inventor: VISBALMENDOZA, Heidyhodex, Toyota-shi, Aichi-ken, 471-8571 (JP); OTAKI, Mitsutoshi, Toyota-shi, Aichi-ken, 471-8571 (JP)
(74) Representative: Winter, Brandl - Partnerschaft mbB

(57) **Abstract**

An electrode mixture includes: an electrode active material containing Si element; a solid electrolyte; and a conductive additive containing a first conductive additive and a second conductive additive. The electrode mixture contains carbon nanotubes as the first conductive additive. The electrode mixture contains a carbon material different from the carbon nanotubes as the second conductive additive.

## Description

### BACKGROUND OF THE INVENTION

### 1. Field of the Invention

The present disclosure relates to an electrode mixture, an electrode layer, a battery, and a solid-state battery.

### 2. Description of Related Art

Batteries have been actively developed in recent years. For example, the automotive industry is currently developing batteries for use in battery electric vehicles (BEVs), plug-in hybrid electric vehicles (PHEVs), or hybrid electric vehicles (HEVs).

For example, Japanese Unexamined Patent Application Publication No. 2024-155039 (JP 2024-155039 A) discloses a negative electrode active material layer containing silicon active material particles, sulfide solid electrolyte particles, and multi-walled carbon nanotubes as a conductive additive. Furthermore, WO 2017/061514 discloses a negative electrode material containing a negative electrode active material, a conductive additive A, a conductive additive B, and a binder. In addition, Japanese Unexamined Patent Application Publication No. 2020-087882 discloses an all-solid-state battery including a negative electrode layer containing an Si-based active material and a needle-shaped conductive material.

### SUMMARY OF THE INVENTION

The solid electrolyte contained in the electrode mixture contributes to improving ionic conductivity. On the other hand, repeated charging and discharging of the battery may cause the solid electrolyte to deteriorate, resulting in a decrease in battery performance.

The present disclosure provides an electrode mixture that can suppress the decrease in battery performance due to the degradation of the solid electrolyte.

### Aspect 1

An electrode mixture includes: an electrode active material containing Si element; a solid electrolyte; and a conductive additive containing a first conductive additive and a second conductive additive.
The electrode mixture
contains carbon nanotubes as the first conductive additive, and
contains a carbon material different from the carbon nanotubes as the second conductive additive.

### Aspect 2

In the electrode mixture according to aspect 1, in the second conductive additive, a product of a Hansen solubility parameter δ_{P} and a specific surface area may be 6500 or less.

### Aspect 3

In the electrode mixture according to aspect 1 or 2, in the second conductive additive, a product of a Hansen solubility parameter δ_{P} and a specific surface area may be 1000 or less.

### Aspect 4

In the electrode mixture according to any one of aspects 1 to 3, in the second conductive additive, a product of a Hansen solubility parameter δ_{P} and a specific surface area may be 100 or more.

### Aspect 5

In the electrode mixture according to any one of aspects 1 to 4, vapor grown carbon fiber may be contained as the second conductive additive.

### Aspect 6

In the electrode mixture according to any one of aspects 1 to 5, a proportion of the second conductive additive in the electrode mixture may be 0.20% by weight or more.

### Aspect 7

In the electrode mixture according to any one of aspects 1 to 6, a proportion of the second conductive additive to the first conductive additive may be 1.0 or more.

### Aspect 8

In the electrode mixture according to any one of aspects 1 to 7, a proportion of the second conductive additive to the first conductive additive may be 7.0 or less.

### Aspect 9

In the electrode mixture according to any one of aspects 1 to 8, the electrode active material may have voids inside primary particles.

### Aspect 10

In the electrode mixture according to any one of aspects 1 to 9, the solid electrolyte may be a sulfide solid electrolyte.

### Aspect 11

An electrode layer comprising the electrode mixture according to any one of aspects 1 to 10.

### Aspect 12

In the electrode layer according to aspect 11, when a cross section of the electrode layer is observed, a proportion of a length of a portion of the second conductive additive that is in contact with the solid electrolyte to a length of an outer edge may be 10% or more.

### Aspect 13

In the electrode layer according to aspect 11, when a cross section of the electrode layer is observed, a proportion of a length of a portion of the second conductive additive that is in contact with the solid electrolyte to a length of an outer edge may be 20% or more.

### Aspect 14

A battery includes: a positive electrode layer; a negative electrode layer; and an electrolyte layer disposed between the positive electrode layer and the negative electrode layer. The positive electrode layer or the negative electrode layer contains the electrode mixture according to any one of aspects 1 to 10.

### Aspect 15

A solid-state battery includes: a positive electrode layer; a negative electrode layer; and a solid electrolyte layer disposed between the positive electrode layer and the negative electrode layer.
The positive electrode layer or the negative electrode layer contains the electrode mixture according to any one of aspects 1 to 10.

The present disclosure has an effect of providing an electrode mixture that can suppress the decrease in battery performance due to the degradation of the solid electrolyte.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:

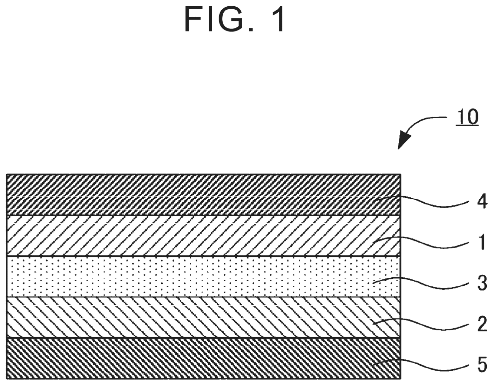

FIG. 1 is a schematic sectional view illustrating an example of a battery according to the present disclosure.

### DETAILED DESCRIPTION OF EMBODIMENTS

The electrode mixture, electrode layer, and battery according to the present disclosure will be described in detail below. Each drawing described below is a schematic drawing, and the size and shape of each part are exaggerated as appropriate to facilitate understanding.

### A. Electrode Mixture

The electrode mixture according to the present disclosure contains an electrode active material containing Si element, a solid electrolyte, and a conductive additive containing a first conductive additive and a second conductive additive. The electrode mixture contains carbon nanotubes as the first conductive additive, and a carbon material different from the carbon nanotubes as the second conductive additive.

According to the present disclosure, by containing a predetermined first conductive additive and a predetermined second conductive additive, an electrode mixture can be obtained that can suppress the decrease in battery performance due to the deterioration of the solid electrolyte.

The solid electrolyte contained in the electrode mixture contributes to improving ionic conductivity. Furthermore, the conductive additive contained in the electrode mixture contributes to improving electronic conductivity. In particular, carbon nanotubes (CNTs) are attracting attention as a conductive additive that can contribute to improving electronic conductivity. On the other hand, the CNTs easily cause the solid electrolyte to be subjected to reductive decomposition, and have caused a new issue that the deterioration of the solid electrolyte is accelerated in an electrode mixture in which the CNTs are used. In this regard, as a result of diligent studies, the inventor has found that the deterioration of the solid electrolyte can be suppressed by using a carbon material (second conductive additive) different from the CNTs in addition to the CNTs (first conductive additive). It is presumed to be because the presence of the second conductive additive decreases the proportion of contact between the CNTs and the solid electrolyte, thereby suppressing the reaction between the CNTs and the solid electrolyte. Furthermore, the CNTs have a relatively small fiber diameter, and therefore may be broken during charging and discharging, which may break the electron conduction path between the CNTs and the active material, resulting in an increase in battery resistance. On the other hand, when a second conductive additive thicker than the CNTs is used, it is presumed that the proportion of a conductive additive that is less likely to be broken can be increased, and an increase in battery resistance can be suppressed.

Here, it is considered that it is possible to suppress the deterioration of the solid electrolyte caused by the CNTs by reducing the proportion of the CNTs in the electrode mixture. On the other hand, when the proportion of the CNTs in the electrode mixture is low, the electrode layer may not be provided with good electronic conductivity. In contrast, in the electrode mixture according to the present disclosure, the deterioration of the solid electrolyte is suppressed by using a second conductive additive that is a carbon material different from the CNTs, and therefore the deterioration of the solid electrolyte can be suppressed while maintaining the proportion of the CNTs. Therefore, the electrode mixture according to the present disclosure is also advantageous in that an electrode layer having good electronic conductivity can be obtained.

### 1. Conductive Additive

The conductive additive according to the present disclosure contains a first conductive additive and a second conductive additive. The first conductive additive and the second conductive additive will be described later.

The conductive additive may contain only the first conductive additive and the second conductive additive, or may contain other conductive additives. In the latter case, the proportion of the first conductive additive and the second conductive additive in the total conductive additive is 80% by weight or more and 99% by weight or less, for example. Examples of the other conductive additives include metal particles and conductive polymers.

In the electrode mixture, the proportion of the conductive additive is 0.10% by weight or more and 10% by weight or less, for example. When the proportion of the conductive additive is too small, a sufficient electron conduction path may not be secured. On the other hand, when the proportion of the conductive additive is too large, the proportion of the active material becomes relatively small, and a sufficient capacity may not be obtained.

### 1-1. First Conductive Additive

The electrode mixture according to the present disclosure contains carbon nanotubes (CNTs) as the first conductive additive.

The carbon nanotubes may be single-walled carbon nanotubes or multi-walled carbon nanotubes.

The diameter of the carbon nanotubes is not particularly limited, and is 1 nm or more, for example, and may be 1.5 nm or more, 2 nm or more, 5 nm or more, or 10 nm or more. On the other hand, the diameter of the carbon nanotubes is 500 nm or less, for example, and may be 300 nm or less, 100 nm or less, 50 nm or less, or 30 nm or less.

The length of the carbon nanotubes is not particularly limited, and is 1 µm or more, for example, and may be 3 µm or more, 5 µm or more, or 10 µm or more. On the other hand, the length of the carbon nanotubes is 500 µm or less, for example, and may be 300 µm or less, 100 µm or less, or 50 µm or less.

The BET specific surface area of the carbon nanotubes is not particularly limited, and is 250 m²/g or more, for example, and may be 500 m²/g or more, 750 m²/g or more, 1000 m²/g or more, or 1200 m²/g or more. On the other hand, the BET specific surface area is 2000 m²/g or less, for example, and may be 1500 m²/g or less or 1300 m²/g or less.

The aspect ratio (length/diameter) of the carbon nanotubes is not particularly limited, and is 100 or more, for example, and may be 500 or more or 1000 or more. On the other hand, the aspect ratio is 5000 or less, for example, and may be 3000 or less or 2000 or less.

The δ_{P} of the carbon nanotubes is not particularly limited, and is 5.0 MPa^{0.5} or more, for example, and may be 5.5 MPa^{0.5} or more or 6.0 MPa^{0.5} or more. On the other hand, the δ_{P} is 8.0 MPa^{0.5} or less, for example, and may be 7.61 MPa^{0.5} or less or 7.0 MPa^{0.5} or less. The δ_{P} will be described later.

The proportion of the first conductive additive in the electrode mixture is not particularly limited, and is 0.05% by weight or more, for example, and may be 0.10% by weight or more, 0.15% by weight or more, 0.20% by weight or more, 0.25% by weight or more, or 0.26% by weight or more. On the other hand, the proportion of the first conductive additive is 3.0% by weight or less, for example, and may be 2.0% by weight or less, 1.0% by weight or less, 0.52% by weight or less, or 0.50% by weight or less.

The electrode mixture may contain only one type of CNTs, or may contain two or more types of CNTs.

### 1-2. Second Conductive Additive

The electrode mixture according to the present disclosure contains a carbon material different from the carbon nanotubes as the second conductive additive.

In the second conductive additive, the product of the polar term (δₚ) in the Hansen solubility parameter (HSP) and the specific surface area is preferably small. The product is 8000 or less, for example, and may be 7000 or less, 6500 or less, 6300 or less, 5000 or less, 3000 or less, or 1000 or less. On the other hand, the product is 100 or more, for example, and may be 150 or more, 200 or more, 300 or more, or 500 or more. The polarity term δ_{P} and the specific surface area will be described later.

From the characteristics of the polarity term δ_{P} and the specific surface area, it is considered that when the product is small, the second conductive additive is more likely to be disposed around the solid electrolyte. In other words, it is considered that the second conductive additive is more likely to be disposed between the solid electrolytes. Here, the electrode mixture according to the present disclosure contains an active material containing Si element (Si-based active material) as the active material, as will be described later. Although the Si-based active material has a large capacity, the Si-based active material undergoes a large change in volume during charging and discharging of the battery. Therefore, the change in volume of the Si-based active material may cause cracks in the solid electrolyte, which may increase resistance. In this regard, as described above, it is considered that by disposing the second conductive additive between the solid electrolytes, the second conductive additive can absorb the stress generated at the interface between the solid electrolytes. As a result, it is considered that cracking of the solid electrolyte can be suppressed, and an increase in battery resistance can be further suppressed.

HSP is a parameter that is used to predict the solubility of a substance, and is obtained by decomposing the Hildebrand solubility parameter (SP value) into three components to be expressed as a three-dimensional vector. The three components include the polar term (δ_{P}) described above, a dispersion force term (δ_{D}), and a hydrogen bond term (δ_{H}).

The polarity term δ_{P} of the second conductive additive is not particularly limited as long as the product described above is met. The polarity term δ_{P} of the second conductive additive is 8.0 MPa^{0.5} or more, for example, and may be 8.5 MPa^{0.5} or more, 9.0 MPa^{0.5} or more, or 9.5 MPa^{0.5} or more. On the other hand, the polarity term δ_{P} of the second conductive additive is 13.0 MPa^{0.5} or less, for example, and may be 12.0 MPa^{0.5} or less or 11.6 MPa^{0.5} or less. Here, it is considered that the affinity between two substances is higher as the values of the polarity term δ_{P} of the two substances is closer. Therefore, the polarity term δ_{P} of the second conductive additive and the polarity term δ_{P} of the solid electrolyte are preferably close to each other. This is because in the electrode mixture, the second conductive additive can be disposed around the solid electrolyte, and the reaction between the solid electrolyte and the CNTs can be further suppressed. When the polarity term δ_{P} of the second conductive additive is X and the polarity term δ_{P} of the solid electrolyte is Y, the absolute value of the difference between X and Y is 0.1 or more and 2.0 or less, for example.

The specific surface area is typically a specific surface area measured by the BET method. The specific surface area is not particularly limited as long as the above product is met, and is 10 m²/g or more, for example, and may be 13 m²/g or more, 20 m²/g or more, 30 m²/g or more, 40 m²/g or more, or 50 m²/g or more. On the other hand, the specific surface area is 1000 m²/g or less, for example, and may be 800 m²/g or less, 780 m²/g or less, 700 m²/g or less, 600 m²/g or less, 300 m²/g or less, or 100 m²/g or less. When the specific surface area is too large, the second conductive additive may aggregate together, decreasing the proportion of contact between the second conductive additive and the solid electrolyte.

Examples of the second conductive additive include particulate carbon materials such as acetylene black (AB) and ketjen black (KB), and fibrous carbon materials such as vapor grown carbon fiber (VGCF) and carbon nanofiber (CNF). As the second conductive additive, a fibrous carbon material is preferred, and VGCF is particularly preferred. The fiber diameter of the fibrous carbon material is not particularly limited, but is preferably larger (thicker) than that of the CNTs. This is because fiber breakage is suppressed and a good electron conduction path can be maintained. The second conductive additive can be considered as a material that contains carbon and has electrical conductivity. For example, the second conductive additive may be a material composed mainly of carbon, such as AB, KB, VGCF, and CNF, or a composite material composed of carbon and other components. Examples of the composite material include an SiC material in which an Si component and a C component exist independently. Examples of the SiC material include a material containing porous carbon and Si filled inside (in the pores of) the porous carbon.

The electrode mixture may contain one type of second conductive additive, or may contain two or more types of second conductive additives. Here, when the electrode mixture contains two or more types of second conductive additives, at least one type of second conductive additive preferably meets the product of δ_{P} and the specific surface area described above.

The proportion of the second conductive additive in the electrode mixture is not particularly limited. The proportion of the second conductive additive is 0.10% by weight or more, for example, and may be 0.20% by weight or more, 0.26% by weight or more, or 0.52% by weight or more. On the other hand, the proportion of the second conductive additive is 5.00% by weight or less, for example, and may be 2.00% by weight or less, 1.80% by weight or less, 1.60% by weight or less, 1.56% by weight or less, 1.30% by weight or less, or 1.04% by weight or less.

The ratio (weight ratio) of the second conductive additive to the first conductive additive is 0.8 or more, for example, and may be 1.0 or more, 2.0 or more, or 3.0 or more. The above ratio is 7.0 or less, for example, and may be 6.0 or less, 5.0 or less, or 4.0 or less.

### 2. Electrode Active Material (Si-based Active Material)

The electrode active material in the electrode mixture is a so-called Si-based active material containing Si element.

Examples of the Si-based active material include elemental Si, Si alloys, and Si oxides. Examples of the Si alloys include Si-Al based alloys, Si-Sn based alloys, Si-In based alloys, Si-Ag based alloys, Si-Pb based alloys, Si-Sb based alloys, Si-Bi based alloys, Si-Mg based alloys, Si-Ca based alloys, Si-Ge based alloys, and Si-Pb based alloys. The Si alloy may be a binary alloy or a multi-component alloy of three or more components. The Si alloy preferably contains Si element as a main component. Examples of the Si oxides include SiO.

The Si-based active material is usually in the form of particles. The Si-based active material may be in the form of primary particles or secondary particles formed by aggregation of the primary particles. The Si-based active material is preferably in the form of porous particles having voids inside, particularly inside the primary particles. This is because the change in volume of the Si-based active material can be suppressed. An Si-based active material having voids inside is called porous Si. The voids inside the primary particles can be observed with a scanning electron microscope (SEM). The porosity of the primary particles is not particularly limited, and is 4% or more, for example, and may be 10% or more. The above porosity is 40% or less, for example, and may be 20% or less. The porosity can be determined by the following procedure, for example. First, a cross-sectional image of the Si-based active material is acquired by SEM. A silicon portion and a void portion are distinguished from the acquired image by using image analysis software and binarized. The areas of the silicon portion and the void portion are determined, and the porosity (%) is calculated using the following formula. 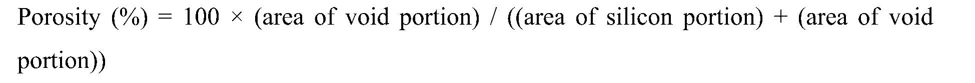 Porosity (%) = 100 × (area of void portion) / ((area of silicon portion) + (area of void portion))

The average pore diameter of the primary particles (porous particles) is not particularly limited, and is 10 nm or more and 100 nm or less, for example. In addition, in the primary particles, the void volume of voids having a pore diameter of 50 nm or less is 0.05 cc/g or more and 0.30 cc/g or less, for example.

Examples of the method of preparing porous particles include a method of producing an alloy of Li and Si (Li-Si alloy) and then removing Li from the Li-Si alloy. The Li-Si alloy is obtained by mixing Li and Si, for example. Examples of the method of removing Li from the Li-Si alloy include a method of causing the Li-Si alloy to react with an Li extraction agent. Examples of Li extraction agent include alcohols such as methanol and acids such as acetic acid.

The Si-based active material may be crystalline or amorphous. When the Si-based active material is crystalline, the Si-based active material typically has an Si crystal phase. Examples of the Si crystal phase include a diamond-type crystal phase. Common Si contains a diamond-type crystal phase as the Si crystal phase. The Si-based active material may contain a diamond-type crystal phase as the main phase of the Si crystal phase.

Other examples of the Si crystal phase include a silicon clathrate-type crystal phase. The silicon clathrate-type crystal phase may be a silicon clathrate I-type crystal phase or a silicon clathrate II-type crystal phase. In the silicon clathrate-type crystal phase, a plurality of Si elements form a polyhedron (cage) including a pentagon or a hexagon. The polyhedron has an internal space that can contain metal ions such as Li ions. By inserting metal ions into the space, the change in volume due to charging and discharging can be suppressed. The Si-based active material may contain a silicon clathrate I-type crystal phase or a silicon clathrate II-type crystal phase as the main phase of the Si crystal phase.

The average particle size D₅₀ of the Si-based active material is not particularly limited, and is 0.3 µm or more and 5.0 µm or less, for example. The average particle size (D₅₀) refers to the cumulative 50% particle size in the volume-based particle size distribution measured by a laser diffraction particle size distribution analyzer.

The proportion of the Si-based active material in the electrode mixture is not particularly limited, and is 50% by weight or more and 90% by weight or less, for example.

### 3. Solid Electrolyte

Examples of the solid electrolyte in the electrode mixture include inorganic solid electrolytes such as a sulfide solid electrolyte, an oxide solid electrolyte, a nitride solid electrolyte, a halide solid electrolyte, and a complex hydride. Among these, the sulfide solid electrolyte is particularly preferable. This is because the sulfide solid electrolyte has high ionic conductivity. The sulfide solid electrolyte typically contains sulfur (S) as a main component of anionic elements. The oxide solid electrolyte, the nitride solid electrolyte, and the halide solid electrolyte typically contain oxygen (O), nitrogen (N), and halogen (X), respectively, as a main component of anionic elements.

The sulfide solid electrolyte preferably contains Li element, X element (X is at least one of P, As, Sb, Si, Ge, Sn, B, Al, Ga, and In), and S element, for example. The sulfide solid electrolyte may further contain at least one of O element and a halogen element.

Examples of the sulfide solid electrolyte include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiO, Li₂S-SiS₂-P₂S₅-LiO, Li₂S-B₂S₃, Li₂S-P₂S₅-ZₘSₙ (where m and n are positive numbers, and Z is any one of Ge, Zn, and Ga), Li₂S-GeS₂, Li₂S-SiS₂-Li₃PO₄, and Li₂S-SiS₂-LiₓMO_{y} (where x and y are positive numbers, and M is any one of P, Si, Ge, B, Al, Ga, and In).

The solid electrolyte may also include organic solid electrolytes such as polymer electrolytes and gel electrolytes.

The solid electrolyte may be glassy or may have a crystal phase. Examples of the crystal phase include a Thio-LISICON-type crystal phase, an Argyrodite-type crystal phase, and an LGPS-type crystal phase. The solid electrolyte is in the form of particles, for example. The average particle size of the solid electrolyte is 0.01 µm or more and 10 µm or less, for example. The ionic conductivity of the solid electrolyte at 25°C is 1×10⁻⁴ S/cm or more, for example, and may be 1 × 10⁻³ S/cm or more.

The proportion of the solid electrolyte in the electrode mixture is not particularly limited, and is 30% by weight or more and 70% by weight or less, for example, and may be 40% by weight or more and 60% by weight or less.

### 4. Electrode Mixture

The electrode mixture may contain a binder as necessary. The binder is not particularly limited as long as it is a conventionally known binder that is used in batteries. Examples of the binder include rubber-based binders such as butadiene rubber (BR), acrylate butadiene rubber (ABR), and styrene butadiene rubber (SBR), and fluorine-containing binders such as polyvinylidene fluoride (PVDF) and polytetrafluoroethylene (PTFE). The proportion of the binder in the electrode mixture is 0.01% by weight or more and 5% by weight or less, for example.

The electrode mixture may also contain a dispersion medium. Examples of the dispersion medium include organic solvents such as butyl butyrate, dibutyl ether, heptane, and tetrahydrofuran. The electrode mixture may be in the form of a slurry or a powder.

The electrode mixture according to the present disclosure is typically used in batteries. The battery will be described later. The electrode mixture may be a positive electrode mixture or a negative electrode mixture, but the latter is preferred. This is because a battery with a higher capacity can be obtained.

### B. Electrode Layer

The electrode layer according to the present disclosure contains the electrode mixture described above. The electrode mixture is the same as that described in "A. Electrode Mixture".

According to the present disclosure, since the electrode layer contains the electrode mixture described above, the deterioration of the solid electrolyte is suppressed.

Here, when the cross section of the electrode layer is observed, it is preferable that a large amount of solid electrolyte is disposed around the second conductive additive. This is because cracking of the solid electrolyte can be suppressed, as described above. The amount of solid electrolyte disposed around the second conductive additive can be determined based on the length of the outer edge of the second conductive additive and the length of the part of the outer edge that is in contact with the solid electrolyte. In the second conductive additive, the proportion of the length of the part that is in contact with the solid electrolyte to the length of the outer edge is 10% or more, for example, and may be 13% or more, 20% or more, 25% or more, 28% or more, 30% or more, or 40% or more. On the other hand, the above proportion is 85% or less, for example, and may be 82% or less, 80% or less, 78% or less, 75% or less, 70% or less, 60% or less, or 50% or less. The above proportion can be measured as follows, for example. First, a cross-sectional SEM image of the electrode layer is acquired, and a second conductive additive portion and a solid electrolyte portion are distinguished using image analysis software. Then, in the cross section of the second conductive additive, the length of the outer edge (length of the entire circumference) and the length of the part of the outer edge that is in contact with the solid electrolyte are measured to calculate the above proportion. The above proportion is preferably an average value. A cross-sectional SEM image containing a plurality of second conductive additives in the same field of view may be acquired to calculate an average value, or a plurality of cross-sectional SEM images containing one second conductive additive in the same field of view may be acquired to calculate an average value.

The electrode layer according to the present disclosure may be a positive electrode layer or a negative electrode layer, but the latter is preferred. The thickness of the electrode layer is not particularly limited, and is 1 µm or more and 1000 µm or less, for example.

### C. Battery

FIG. 1 is a schematic sectional view illustrating an example of a battery according to the present disclosure. The battery 10 illustrated in FIG. 1 includes a positive electrode layer 1, a negative electrode layer 2, an electrolyte layer 3 disposed between the positive electrode layer 1 and the negative electrode layer 2, a positive electrode current collector 4 that collects electrons from the positive electrode layer 1, and a negative electrode current collector 5 that collects electrons from the negative electrode layer 2. Moreover, the positive electrode layer 1 or the negative electrode layer 2 contains the electrode mixture according to the present disclosure described above.

According to the present disclosure, the use of the electrode mixture described above results in a battery in which an increase in resistance due to degradation of the solid electrolyte is suppressed. Here, as described above, the electrode mixture may be a negative electrode mixture or a positive electrode mixture, but the former is preferred. A battery in which the electrode mixture is a negative electrode mixture will be described in detail below.

### 1. Negative Electrode Layer

The negative electrode layer contains the electrode mixture described above. The details of the negative electrode layer are the same as those described in "A. Electrode Mixture" and "B. Electrode Layer".

### 2. Positive Electrode Layer

The positive electrode layer contains at least a positive electrode active material. Furthermore, the positive electrode layer may contain at least one of a conductive additive, a binder, and a solid electrolyte as necessary.

Examples of the positive electrode active material include an oxide active material. Examples of the oxide active material include layered rock-salt active materials such as LiCoO₂, LiNi_{1/3}CO_{1/3}Mn_{1/3}O₂, and LiNi_{0.8}Co_{0.15}Al_{0.05}O₂, spinel active materials such as LiMn₂O₄ and Li₄Ti₅O₁₂, and olivine active materials such as LiFePO₄.

A coating layer containing an Li-ion conductive oxide may be formed on the surface of the oxide active material. This is because the reaction between the oxide active material and the solid electrolyte (particularly the sulfide solid electrolyte) can be suppressed. Examples of the Li-ion conductive oxide include LiNbO₃, Li₄Ti₅O₁₂, and Li₃PO₄.

The positive electrode active material is in the form of particles, for example. The average particle size D₅₀ of the positive electrode active material is 0.5 µm or more and 50 µm or less, for example. The average particle size (D₅₀) is as described above.

Examples of the conductive additive include carbon materials, metal particles, and conductive polymers. Examples of the carbon materials include particulate carbon materials such as acetylene black (AB) and ketjen black (KB), and fibrous carbon materials such as vapor grown carbon fiber (VGCF), carbon nanotube (CNT), and carbon nanofiber (CNF). The binder and the solid electrolyte are the same as those described in "A. Electrode Mixture".

The thickness of the positive electrode layer is not particularly limited, and is 1 µm or more and 1000 µm or less, for example.

### 3. Electrolyte Layer

The electrolyte layer is a layer disposed between the positive electrode layer and the negative electrode layer, and contains at least an electrolyte. The electrolyte layer may contain a solid electrolyte or a liquid electrolyte (electrolytic solution), but preferably includes the former. Here, an electrolyte layer containing a solid electrolyte is called a solid electrolyte layer. The solid electrolyte layer may contain only the inorganic solid electrolyte described above, or may further contain an organic solid electrolyte such as a polymer electrolyte or a gel electrolyte. Here, in general, a battery including a solid electrolyte layer is called a solid-state battery. The solid-state battery may be a semi-solid-state battery or an all-solid-state battery. A battery including a solid electrolyte layer containing only an inorganic solid electrolyte as the solid electrolyte corresponds to an all-solid-state battery.

The electrolyte layer may also contain a binder as necessary. The binder is the same as that described in "A. Electrode Mixture". The thickness of the electrolyte layer is not particularly limited, and is 1 µm or more and 1000 µm or less, for example.

### 4. Other Members

The battery according to the present disclosure may include a positive electrode current collector that collects a current from the positive electrode layer, and a negative electrode current collector that collects a current from the negative electrode layer. Examples of the material of the positive electrode current collector include metals such as SUS, Ni, Cr, Au, Pt, Al, Fe, Ti, and Zn. Examples of the material of the negative electrode current collector include metals such as Cu and Cu alloys. A coating layer containing at least one of Ni, Cr, and C may be formed on the surface of the positive electrode current collector and the negative electrode current collector. The coating layer may be a plated layer or a vapor-deposited layer. The positive electrode current collector and the negative electrode current collector may be in the form of a foil, for example.

The battery according to the present disclosure may include an exterior body that houses the members described above. Examples of the exterior body include a laminate-type exterior body and a case-type exterior body. The battery according to the present disclosure may also include a restraining jig that applies a restraining pressure in the thickness direction to the members described above. A known jig can be used as the restraining jig. The restraining pressure is 0.1 MPa or more and 50 MPa or less, for example, and may be 1 MPa or more and 20 MPa or less.

### 5. Battery

The battery according to the present disclosure is typically a lithium ion secondary battery. Furthermore, the battery according to the present disclosure is typically a solid-state battery including a solid electrolyte layer. The battery according to the present disclosure may be a semi-solid-state battery or an all-solid-state battery. Examples of the application of the battery include a power source for vehicles such as hybrid electric vehicles (HEVs), plug-in hybrid electric vehicles (PHEVs), battery electric vehicles (BEVs), gasoline vehicles, and diesel vehicles. Furthermore, the battery according to the present disclosure may be used as a power source for mobile objects other than vehicles (for example, trains, ships, and aircrafts), and may be used as a power source for electrical appliances such as information processing devices.

The present disclosure is not limited to the above embodiment. The above embodiment is merely illustrative, and any structure that has substantially the same configuration as, and exhibits functions and effects similar to, the technical idea set forth in the claims of the present disclosure is included within the technical scope of the present disclosure.

### Example 1

### Preparation of Negative Electrode Active Material

Metallic Li and Si powder were weighed out so as to have a molar ratio of 4:1, and were mixed in a mortar under an Ar atmosphere at room temperature for 0.5 hours to react with each other. In this way, Li₄Si was obtained. The resulting Li₄Si was caused to react with ethanol under an Ar atmosphere. The resulting reaction product is considered to contain Si and CH₃CH₂OLi. The reaction product was filtered, and the obtained solid content was dried at 120°C for 3 hours or more. In this way, powdered porous Si was obtained as the negative electrode active material.

### Preparation of Negative Electrode

A solvent (tetralin), a binder (a binder solution containing 5% by weight of a BR-based binder), a first conductive additive (single-walled carbon nanotubes), a second conductive additive (VGCF), the above negative electrode active material, and a sulfide solid electrolyte (Li₂S -P₂S₅-based glass ceramic) were added to a polypropylene (PP) container, and the mixture was stirred for 30 seconds using an ultrasonic dispersing device (US-50 manufactured by SMT Co., LTD.). Next, the container was shaken for 3 minutes using a shaker (TTM-1 manufactured by Sibata Scientific Technology Ltd.). Then, the mixture was stirred for additional 30 seconds using the ultrasonic dispersing device. In this way, a negative electrode slurry was prepared. The negative electrode slurry was applied onto a negative electrode current collector (Cu foil) by a blade method using an applicator, and then dried on a hot plate. In this way, a negative electrode having a negative electrode current collector and a negative electrode layer was obtained. The negative electrode was densified by roll pressing at 60 kN/cm and 25°C.

Here, the δ_{P} and the specific surface area of the VGCF used are indicated in Table 1. The proportions of the first conductive additive and the second conductive additive were as indicated in Table 1. The single-walled carbon nanotubes used had a δ_{P} of 7.61 MPa^{0.5} and a BET specific surface area of 1000 m²/g, and the product of the δ_{P} and the specific surface area was 7610.

### Preparation of Positive Electrode

A solvent (butyl butyrate), a binder (a binder solution containing 5% by weight of a PVDF-based binder), a positive electrode active material (LiNi_{1/3}Co_{1/3}Mn_{1/3}O₂; average particle size 6 µm), a sulfide solid electrolyte (Li₂S-P₂S₅-based glass ceramic), and a conductive additive (VGCF) were added to a PP container, and the mixture was stirred for 30 seconds using an ultrasonic dispersing device (US-50 manufactured by SMT Co., LTD.). Next, the container was shaken for 3 minutes using a shaker (TTM-1 manufactured by Sibata Scientific Technology Ltd.). Then, the mixture was stirred for additional 30 seconds using the ultrasonic dispersing device. In this way, a positive electrode slurry was prepared. The positive electrode slurry was applied onto a positive electrode current collector (Al foil) by a blade method using an applicator, and then dried on a hot plate. In this way, a positive electrode having a positive electrode current collector and a positive electrode layer was obtained. The area of the positive electrode was smaller than the area of the negative electrode.

### Preparation of Transfer Member

A solvent (heptane), a binder (a binder solution containing 5% by weight of a BR-based binder), and a sulfide solid electrolyte (Li₂-P₂S₅-based glass ceramic) were added to a PP container, and the mixture was stirred for 30 seconds using an ultrasonic dispersing device (US-50 manufactured by SMT Co., LTD.). Next, the container was shaken for 3 minutes using a shaker (TTM-1 manufactured by Sibata Scientific Technology Ltd.). Then, the mixture was stirred for additional 30 seconds using the ultrasonic dispersing device. In this way, a slurry was prepared. The slurry was applied onto a transfer foil (Al foil) by a blade method using an applicator, and then dried on a hot plate. In this way, a transfer member having a solid electrolyte layer and a transfer foil was obtained.

### Fabrication of Evaluation Battery

The transfer member was placed on the positive electrode such that the positive electrode layer and the solid electrolyte layer faced each other. This laminate was set in a roll pressing machine and roll-pressed at 160°C and 100 kN/cm. Thereafter, the transfer foil was peeled off to obtain a positive electrode laminate. Furthermore, the solid electrolyte layer for bonding and the transfer member were placed on the negative electrode layer. This laminate was set in a flat uniaxial pressing machine and pressed at 25°C and 100 MPa for 10 seconds. Thereafter, the transfer foil was peeled off to obtain a negative electrode laminate. The negative electrode laminate and the positive electrode laminate were prepared such that the area of the negative electrode laminate was larger than the area of the positive electrode laminate. The positive electrode laminate was placed on the negative electrode laminate such that the solid electrolyte layers faced each other, and this was set in a flat uniaxial pressing machine and pressed at 120°C and 200 MPa for 1 minute. In this way, an evaluation battery (all-solid-state battery) was fabricated.

### Examples 2 to 4

An evaluation battery was fabricated in the same manner as in Example 1, except that the proportion of the second conductive additive in the negative electrode layer was changed as indicated in Table 1.

### Examples 5 and 6

The type and the proportion of the second conductive additive in the negative electrode layer were changed as indicated in Table 1. An evaluation battery was fabricated in the same manner as in Example 1, except for these points.

### Comparative Example 1

An evaluation battery was fabricated in the same manner as in Example 1, except that the second conductive additive was not used in the negative electrode layer.

### Comparative Example 2

An evaluation battery was fabricated in the same manner as in Comparative Example 1, except that the proportion of the first conductive additive in the negative electrode layer was changed as indicated in Table 1.

### Evaluation

### Microscopic Observation

A cross-sectional SEM image of the negative electrode layer was acquired. As described above, the length of the outer edge of the second conductive additive and the length of the part of the outer edge of the second conductive additive that is in contact with the solid electrolyte were measured using image analysis software. Then, the proportion of the length of the part that is in contact with the solid electrolyte to the length of the outer edge was calculated. The results are indicated in Table 2. In Table 2, the above proportion is expressed as SE rate.

### Measurement of Resistance Increase Rate

The obtained all-solid-state battery was restrained with a restraining jig, and the resistance increase rate was measured by the following charge-discharge test. First, the battery was charged to 4.55 V at 0.1 C by CCCV charging, and then discharged to 3.0 V at 1 C. Next, after being charged to 3.9 V, the battery was discharged to 3.7 V at 0.1 C and then at 14.7 mA for 5 seconds, and the initial resistance was determined from the voltage drop value. Next, the battery was charged to 4.35 V at 1/3 C by CCCV charging and then discharged to 3.0 V at 1/3 C by CCCV discharging, and this charge-discharge cycle was repeated 100 times. Thereafter, the resistance after charging and discharging was determined in the same manner as described above. The difference between the resistance after charging and discharging and the initial resistance was calculated as the resistance increase amount, and the resistance increase rate was calculated. The results were evaluated relative to the result of Comparative Example 1 being defined as 100. The results are indicated in Table 2.

**Table 1**

| | Proportions of conductive additives (wt%) | | | | Second conductive additive | | | |
|---|---|---|---|---|---|---|---|---|
| | First conductive additive | Second conductive additive | Total | Second/First | Type | δₚ (MPa^{0.5}) | Specific surface area (m²/g) | δₚ*specific surface area |
| Comp. Ex. 1 | 0.26 | 0 | 0.26 | - | - | - | - | - |
| Comp. Ex. 2 | 0.52 | 0 | 0.52 | - | - | - | - | - |
| Ex. 1 | 0.26 | 0.26 | 0.52 | 1.0 | VGCF | 11.6 | 13 | 150.8 |
| Ex. 2 | 0.26 | 0.52 | 0.78 | 2.0 | VGCF | 11.6 | 13 | 150.8 |
| Ex. 3 | 0.26 | 1.04 | 1.30 | 4.0 | VGCF | 11.6 | 13 | 150.8 |
| Ex. 4 | 0.26 | 1.56 | 1.82 | 6.0 | VGCF | 11.6 | 13 | 150.8 |
| Ex. 5 | 0.26 | 0.52 | 0.78 | 2.0 | KB | 10.5 | 600 | 6300 |
| Ex. 6 | 0.26 | 0.52 | 0.78 | 2.0 | AB | 13 | 60 | 780 |

**Table 2**

| | SE rate (%) | Resistance increase rate |
|---|---|---|
| Comp. Ex. 1 | - | 100 |
| Comp. Ex. 2 | - | 110 |
| Ex. 1 | 82 | 89 |
| Ex. 2 | 78 | 78 |
| Ex. 3 | 70 | 82 |
| Ex. 4 | 75 | 83 |
| Ex. 5 | 13 | 94 |
| Ex. 6 | 28 | 85 |

As indicated in Table 2, it was confirmed that Examples 1 to 6, in which the second conductive additive was used, had a significantly suppressed resistance increase rate compared to Comparative Examples 1 and 2, in which the second conductive additive was not used. Furthermore, as indicated in Tables 1 and 2, it was confirmed that when the proportion of the second conductive additive was the same, the resistance increase rate was suppressed to a greater degree as the product of the polarity term δ_{P} and the specific surface area was smaller (Examples 2, 5, and 6). This is presumed to be because as the above product was smaller, a larger amount of the solid electrolyte was disposed around the second conductive additive, suppressing cracking of the solid electrolyte.

## Claims

1. An electrode mixture comprising:
an electrode active material containing Si element;
a solid electrolyte; and
a conductive additive containing a first conductive additive and a second conductive additive, wherein
the electrode mixture
contains carbon nanotubes as the first conductive additive, and
contains a carbon material different from the carbon nanotubes as the second conductive additive.

2. The electrode mixture according to claim 1, wherein in the second conductive additive, a product of a Hansen solubility parameter δ_{P} and a specific surface area is 6500 or less.

3. The electrode mixture according to claim 1, wherein in the second conductive additive, a product of a Hansen solubility parameter δ_{P} and a specific surface area is 1000 or less.

4. The electrode mixture according to claim 1, wherein in the second conductive additive, a product of a Hansen solubility parameter δ_{P} and a specific surface area is 100 or more.

5. The electrode mixture according to claim 1, wherein vapor grown carbon fiber is contained as the second conductive additive.

6. The electrode mixture according to claim 1, wherein a proportion of the second conductive additive in the electrode mixture is 0.20% by weight or more.

7. The electrode mixture according to claim 1, wherein a proportion of the second conductive additive to the first conductive additive is 1.0 or more.

8. The electrode mixture according to claim 1, wherein a proportion of the second conductive additive to the first conductive additive is 7.0 or less.

9. The electrode mixture according to claim 1, wherein the electrode active material has voids inside primary particles.

10. The electrode mixture according to claim 1, wherein the solid electrolyte is a sulfide solid electrolyte.

11. An electrode layer comprising the electrode mixture according to any one of claims 1 to 10.

12. The electrode layer according to claim 11, wherein when a cross section of the electrode layer is observed, a proportion of a length of a portion of the second conductive additive that is in contact with the solid electrolyte to a length of an outer edge is 10% or more.

13. The electrode layer according to claim 11, wherein when a cross section of the electrode layer is observed, a proportion of a length of a portion of the second conductive additive that is in contact with the solid electrolyte to a length of an outer edge is 20% or more.

14. A battery (10) comprising:
a positive electrode layer (1);
a negative electrode layer (2); and
an electrolyte layer (3) disposed between the positive electrode layer (1) and the negative electrode layer (2), wherein
the positive electrode layer (1) or the negative electrode layer (2) contains the electrode mixture according to any one of claims 1 to 10.

15. A solid-state battery comprising:
a positive electrode layer;
a negative electrode layer; and
a solid electrolyte layer disposed between the positive electrode layer and the negative electrode layer; wherein
the positive electrode layer or the negative electrode layer contains the electrode mixture according to any one of claims 1 to 10.
